# EUROPEAN PATENT SPECIFICATION

(11) **EP 2 472 953 B1**
(45) Date of publication and mention of the grant of the patent: **13.07.2016**
(21) Application number: 11010238.1
(22) Date of filing: 27.12.2011
(51) Int. Cl.: H04W 36/14, H04W 36/18, H04W 88/06, H04W 36/02, H04W 76/02

(54) **Methods and apparatus for primed handover**
Verfahren und Vorrichtung für eine vorbereitete Leitungsübergabe
Procédés et appareil pour transfert amorcé

(30) Priority: 28.12.2010 US 980240
(43) Date of publication of application: 04.07.2012
(73) Proprietor: u-blox AG, 8800 Thalwil (CH)
(72) Inventor: Moradi, Hussein, Ammon Idaho 83406 (US); Camarillo, Richard Joseph, San Diego California 92129 (US)
(74) Representative: Wagner, Wolfgang Heribert

(56) References cited:
- ACM, 2 PENN PLAZA, SUITE 701 - NEW YORK USA, 1 September 2008 (2008-09-01), XP040461777,
- JAVED K ET AL: "An Efficient Approach for Vertical Handover between WLAN and EVDO", INFORMATION TECHNOLOGY CONVERGENCE AND SERVICES (ITCS), 2010 2ND INTERNATIONAL CONFERENCE ON, IEEE, PISCATAWAY, NJ, USA, 11 August 2010 (2010-08-11), pages 1-5, XP031760220, ISBN: 978-1-4244-7584-1
- YING WANG ET AL: "Modularized two-step vertical handoff scheme in integrated WWAN and WLAN", HIGH PERFORMANCE SWITCHING AND ROUTING, 2005. HPSR. 2005 WORKSHOP ON HONG KONG, CHINA 12-14 MAY, 2005, PISCATAWAY, NJ, USA,IEEE, 12 May 2005 (2005-05-12), pages 520-524, XP010832830, DOI: 10.1109/HPSR.2005.1503287 ISBN: 978-0-7803-8924-3

## Description

### Copyright

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### Background of the Invention

### Field of invention

The present invention relates generally to the field of wireless communication. More particularly, in one exemplary aspect, the present invention is directed to methods and apparatus for non-intrusive and/or seamless handover for client devices between a plurality of wireless networks.

### Description of Related Technology

Within the context of wireless networks, the term "handover" or "hand-off" refers generally to the transitioning of a connection or session (e.g., data, voice, etc.) from a first wireless network to a second wireless network. Handovers can be initiated for a wide variety of reasons; for example, a handover may be initiated when moving from a first area of wireless coverage to a second area of wireless coverage. Other common handover scenarios may be executed to, inter alia, manage network resources (e.g., bandwidth), minimize interference between network clients, or maximize user experience (e.g., quality of service (QoS), billing, etc.).

Handovers are generally categorized as being "vertical" or "horizontal" handovers. Vertical handovers refer generally to handovers between different network technologies; for example, between a local area network and a cellular network or *vice versa.* In contrast, horizontal handovers are performed within the same network (such as cellular networks); e.g., between two cells or access points of the same network. Since horizontal handovers share a common network infrastructure, horizontal handovers may be controlled by one or more common network management entities to provide seamless transitions. Vertical handovers span different technologies; therefore, existing solutions for vertical handovers experience significant delays which can span several seconds or result in call failure. This can severely impact user "experience" and is highly undesirable.

From Zhiwei Yan, Huachun Zhou, Hongke Zhang, Hongbin Luo, Sidong Zhang: 'A Dual Threshold-based Fast Vertical Handover Scheme', The International Conference on Mobile Technology, Applications & Systems 2008 10-12 September, 2008, Ilan, Taiwan a method conforming to the generic part of Claim 1 is known. This method allows, in general, for seamless vertical handovers but has also certain deficiencies. In particular, sudden changes in the quality of the first and second network connections during handover can lead to loss of data and lead to reduced service quality.

In Khurram Javed, Umar Saleem, Khalid Hussain, Muhammad Sher: 'An Efficient Approach for Vertical Handover between WLAN and EVDO', 2nd International Conference on Information Technology Convergence and Services (ITCS), 2010, IEEE, Piscataway NJ a method for a handover between a first and second network is known where data from the first network is captured and half of it stored in a first buffer to be then combined in a second buffer with later received data from the second network. There is, apparently, no parallel capturing and buffering of data from the first and second networks and a substantial loss of data is incurred during the transition period.

### Summary of the invention

It is therefore a first object of the invention to provide seamless handover even under difficult conditions, in particular, where sudden drastic changes in connection quality of either the primary or the secondary connection occur during handover.

This object is achieved by the features of the characterizing portion of Claim 1. Due to the parallel buffering of data from the first and second network it is, even with sudden changes in connection quality, always possible to either carry on with an initiated handover or cancel it if, e.g., the first network suddenly improves or the quality of the second network deteriorates or if a handover appears inappropriate in the end for some other reason. Even if one of the networks fails or terminates the application data will not be interrupted or data package synchronization lost.

The buffering is in one implementation performed equally between the first and second network. The buffering may also be performed based on the capabilities of the first and second network.

In a variant, the buffering comprises receiving the data transmitted over the first and second networks, wherein the data is substantially equivalent.

In another variant, the buffering comprises receiving the data transmitted over the first and second networks, wherein the data is substantially different.

In yet another variant, the buffering is performed based on battery considerations.

It is another object of the invention to propose a mobile apparatus which is suitable for carrying out the method according to the invention.

In one variant, the first wireless interface comprises a WLAN interface (e.g., Wi-Fi), and the second interface comprises a WMAN interface (e.g., WiMAX). In another variant, the first wireless interface comprises a cellular interface (e.g., CDMA2000), and the second interface comprises a WMAN interface.

It is a further object of the invention to disclose a computer readable storage medium comprising instructions which, when executed by a processor of the same, enable the apparatus according to the invention to carry out the invention.

Other features and advantages of the present invention will immediately be recognized by persons of ordinary skill in the art with reference to the attached drawings and detailed description of exemplary embodiments as given below.

### Brief description of the drawings

FIG. 1 graphically illustrates one exemplary prior art vertical handover scenario.
FIG. 2 graphically illustrates two software applications and communication stacks in communication across a network, useful with various embodiments of the present invention.
FIG. 3 is a logical flow diagram illustrating one embodiment of a method for seamlessly transitioning a data session from a first network to a second network, according to the invention.
FIG. 4 is a logical flow diagram illustrating one embodiment of a generalized method for transitioning a data session between networks in accordance with the invention.
FIG. 5 is a block diagram of one embodiment of an exemplary apparatus useful for implementing the methods of the present invention.

### Detailed description of the invention

Reference is now made to the drawings, wherein like numerals refer to like parts throughout.

### Overview

Various aspects of the present invention enable non-intrusive and/or seamless transitions between different networks. As used herein, the term "non-intrusive" refers to a transition between a plurality of wireless networks which is automatically executed without requiring triggering input from either a user, or a user application. "Seamless", as used herein, refers to a transition between a plurality of wireless networks, where the application data is not interrupted during the transition, even where a participating network abruptly fails or terminates.

In one exemplary aspect, a mobile device provides a "soft" handover by scanning and monitoring nearby radio networks for suitable handover networks. In one embodiment, scanning the networks comprises active monitoring of one or more parameters related to channel conditions (e.g., Received Signal Strength Indication (RSSI), Bit Error Rate (BER), Signal-to-Noise Ratio (SNR), etc.) from connected cells and neighboring cells.

In another aspect of the invention, if the mobile device determines that the existing connection is failing, the mobile device preemptively "primes" a data connection to the second network.

In various embodiments of the present invention, failure is predicted based on deterioration of one or more channel conditions. For example, the incipient failure may be based on high BER, low SNR, low RSSI, or trends or patterns in one or more of the foregoing etc. As described in greater detail subsequently herein, monitoring is in one implementation optimized to prevent excessive "false positives", while also minimizing power consumption.

In yet another aspect of the invention, the mobile device buffers data across the multiple connections until the handover is completed. For example, in one exemplary embodiment, a circular buffer is used to capture data from a primary and secondary connection. When the primary and secondary buffer have substantially equivalent data, then the primary and secondary buffer are "synchronized". With a synchronized primary and secondary buffer, drastic changes in connection quality of either the primary or secondary connection will not affect the service quality as data from either buffer can be used interchangeably. Exemplary apparatuses for implementing various aspects of the present invention are also disclosed. In one embodiment, the apparatus comprises a handover controller which triggers handover execution based on one or more software application requirements.

### Detailed Description of Exemplary Embodiments

Exemplary embodiments of the present invention are now described in detail.

While these embodiments are primarily discussed in the context of vertical handovers spanning different radio access technologies, artisans having ordinary skill in the related arts will recognize that the various aspects of the present invention are equally applicable to horizontal handovers within the same network, as well as between two different networks having the same basic radio access technology.

Moreover, while the following descriptions are discussed in the context of a first and second network, it is appreciated that in future embodiments (e.g., as resources are improved and become less expensive), multiple networks may be monitored, buffered, and transitioned to, etc. Thus, all combinations of a client connected to one or more networks executing a handover to one or more other networks are encompassed within the present invention (i.e., one to many, many to one, many to many, or one to one).

Furthermore, while the following discussions relate primarily to channel conditions, it is appreciated that other factors may be considered. For example, common other factors include: desirability of a network (e.g., where one network is preferential over another, etc.), business considerations, network capabilities, etc. Such factors may be pre-selected and/or weighted by the user. Moreover, factors may be considered individually, or grouped as a set.

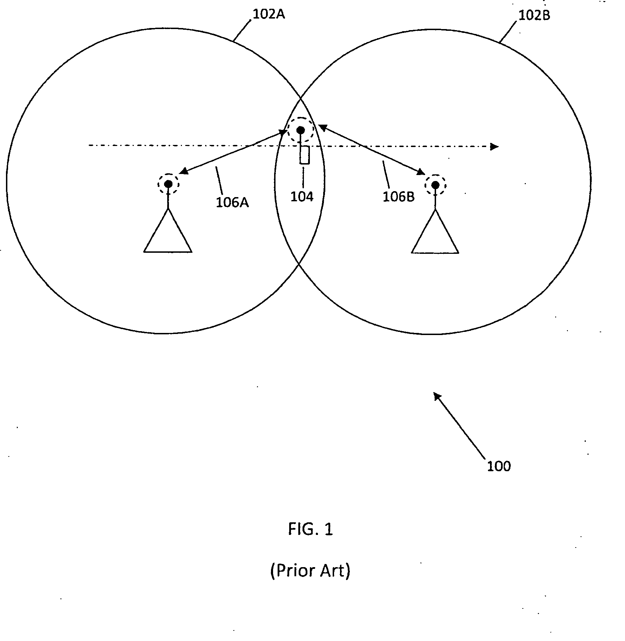

Referring now to FIG. 1, a prior art handover scenario 100 between a first and second wireless network (102A, 102B) is presented. As shown, a mobile device 104 lies in overlapping coverage between the first and second network, the mobile device executing an application over a current connection 106A with the first network. When the mobile device leaves the coverage area of the first network, the resulting drop in signal reception of the first network causes the mobile device to scan for other available networks. The mobile device detects a second network, and establishes a replacement connection 106B to the second network. Once the replacement connection has been established, the mobile device terminates its existing connection with the first network, and, if possible, transitions its application to the replacement connection.

Other prior art embodiments (not shown) may execute the application on a server accessible via the network (e.g., in a so-called "cloud computing" architecture), rather than at the mobile device 104. In such architectures, when the mobile device drops its current connection 106A, it must reestablish a replacement connection 106B to the server, possibly via a different network. Yet other combinations and gradations of client-server type applications are well known to those familiar with the related arts.

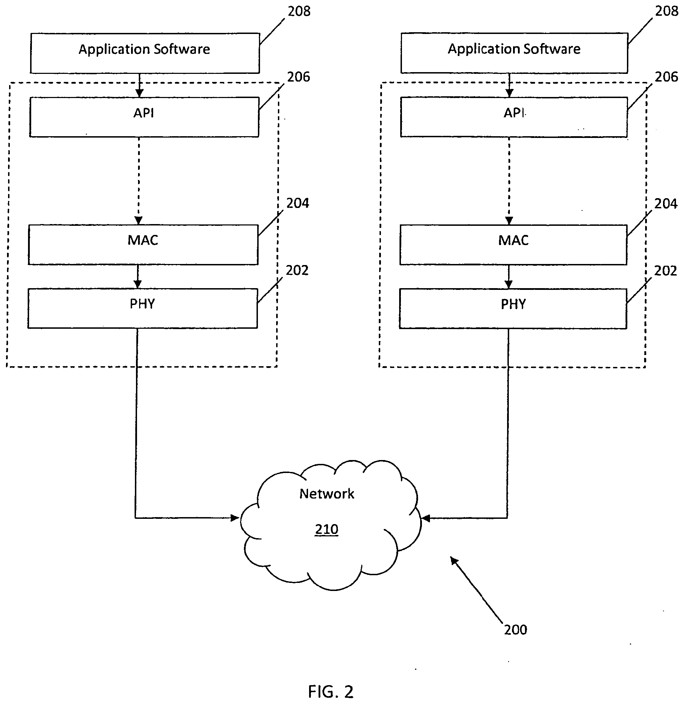

As a brief aside, software applications are generally executed on a hierarchical "communication stack". Two exemplary stacks in communication 200 are illustrated in FIG. 2. As well known in the related arts, the stack comprises multiple layers such as, *inter alia,* the physical layer (PHY) 202, and medium access control (MAC) layer 204, etc. Within a device, each layer provides services to the layer above it, and receives services from the layer below.

For example, as shown, the PHY layer controls access to the physical medium of the wireless transmission network 210. The MAC layer builds on the PHY layer, and controls addressing of the device, and coordinates with peer devices to, e.g., prevent access collisions. During normal operation, each layer is in logical communication with the counterpart layer of a peer device. Each layer of software adds additional complexity and capabilities over the previous layer. Consequently, the application programming interface (API) 206 can present a simple network interface to an overriding client application 208, without also presenting the minutiae associated with managing the communication link.

Within horizontal handover procedures, the stack is preserved, as the new network is using the same technology and protocols as the current network. However, prior art solutions for vertical handovers are much more cumbersome, as the existing stack must be terminated, and a new stack associated with the new network must be initiated.

Moreover, the current and new stacks do not share a common protocol, and cannot coordinate during the handover.

### Methods and Operation

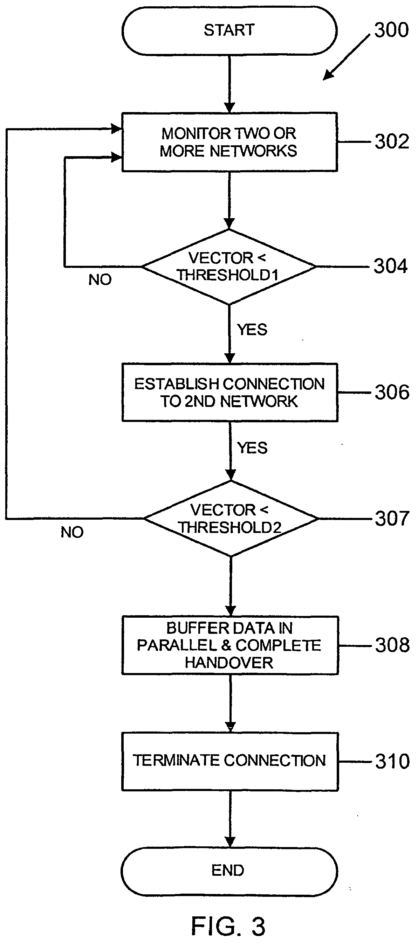

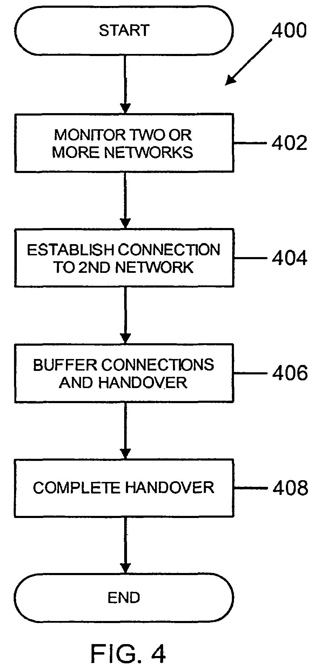

Referring now to FIG. 3, one exemplary implementation 300 of the generalized method 400 (FIG. 4) according to the present invention is described. This particular implementation 300 is presented to illustrate various aspects of the invention as it relates to so-called "soft" vertical handovers.

Consider a mobile device in overlapping coverage between a first and second network, where the mobile device is running an application over a current connection with the first network.

At step 302 of the method, the mobile device scans the channel conditions of two or more networks. In this example, the mobile device has multiple modems, and identifies the second network as a suitable network for handover. Once the suitable network is identified, the mobile device continues to monitor both the first and second network. The mobile device monitors one or more vectors, e.g., the received signal strength indication (RSSI) of the first and second networks. The mobile device in this embodiment also monitors the rate of change of the RSSI.

If, at a later point, the mobile device determines that the existing connection with the first network has begun to degrade (step 304), then the mobile device connects to the second network, but does not transition the application to the new connection. Specifically, the mobile device at least partly establishes a new connection to the second network, responsive to the monitored vector of the first network falling below a first threshold (step 306). Once the new connection is established, the mobile device is "primed" for handover. As used herein, the terms "prime", "primes", "primed" and "priming", refer generally to initiating a subset of the standard registration process for a replacement network (i.e., the registration process is not completed). For example, where standard network registration may include: (i) scanning for a network, (ii) decoding a network control channel, (iii) contacting a network based on information decoded from the control channel, and (iv) attaching to the network; one example of priming the replacement connection may only comprise: (i) scanning for a network, (ii) decoding a network control channel, and (iii) contacting a network based on information decoded from the control channel, but exclude attachment.

If the monitored vector continues to fall (step 307), and meets a second criterion (e.g., drops below a second threshold), then the handover is initiated (step 308). On the other hand, if the monitored vector recovers above the first threshold, then the new connection is not needed, and closed (or maintained in an unused state, depending on the higher layer logic discussed in greater detail below).

Once the current connection falls below a second transition threshold, the mobile device transitions the application to the new connection (step 308). During step 308, the device briefly parallel buffers or copies data on the first and second networks. The parallel buffered data ensures that if either the first or second network abruptly fails or terminates, the application data will not be interrupted or lose data packet synchronization.

At step 310, the mobile device completes the handover from the first network to the second network. The connection to the first network is terminated (or, in some implementations, monitored for recovery, such as where the first network is preferred or optimal for some reason), and the application continues on the second network connection.

The foregoing discussion illustrates several salient aspects of the present invention. Firstly, the exemplary mobile device provides a "soft" handover by scanning and monitoring nearby radio networks for suitable handover networks. Secondly, if the mobile device determines that the existing connection is failing, the mobile device preemptively primes a data connection to the second network. Thirdly, the mobile device maintains the existing and replacement connections, and parallel buffers received data until the handover is completed. Each of the foregoing actions ensures that various embodiments of the present invention provide seamless and/or non-intrusive transitions between different networks.

While the foregoing discussion describes one exemplary scenario illustrating the various advantages of one exemplary embodiment of the present invention, artisans having ordinary skill in the related arts will recognize that various aspects of the present invention can be generalized to handle a plethora of other implementations. For example, while the foregoing scenario is implemented entirely on the mobile device, at least a portion of the logic necessary to implement this functionality may be resident on one or more network-side servers. In one alternative embodiment, the monitored data (whether "raw" or processed by the mobile device), can be sent back to the one or more network servers, the latter making the decision on at least when to switch (and even if desired, the availability of other networks). In such architectures, when the one or more network servers determines that the monitored vectors have dropped below acceptable thresholds, the one or more network servers primes a replacement connection to the mobile device, possibly via a different network.

In other variants, the one or more network servers may issue a request to the mobile, such that the mobile primes a replacement connection. Artisans of ordinary skill may readily adapt the solutions contained herein to suit other combinations and gradations of client-server architectures.

Referring now to FIG. 4, one exemplary embodiment of the generalized method 400 for non-intrusive and/or seamless handover for client devices between a plurality of wireless networks is now discussed in greater detail. The following discussion is described in the context of a client device in overlapping coverage between multiple available wireless networks, where the mobile device is running an application over a current connection with a first network, although it should be appreciated that this is in no way limiting on the broader aspects of the invention.

At step 402, one or more other networks are scanned or monitored. In one exemplary embodiment, the one or more networks are selected from a preferred list of networks. For example, certain network technologies have pre-arranged partner networks, e.g., cellular networks may preferentially support one type network over other available networks (e.g., a cellular phone may preferentially search for Wi-Fi connections, when its current network connectivity is insufficient). Accordingly, in some device embodiments, a list of preferred networks is stored within the device, and may be periodically updated.

In other embodiments, the one or more networks are selected from a list of networks currently advertised via its existing connection. For example, a WLAN connection may advertise alternate nearby networks (e.g., WiMAX, cellular, etc.).

In one exemplary implementation, scanning the networks comprises analyzing one or more parameters of possible networks, to identify a candidate replacement network. Solutions for scanning span a myriad of possible techniques, the following being merely illustrative.

In one such embodiment, scanning the networks includes active decoding of one or more channels. For example, scanning the networks comprises decoding a channel to determine a relative Bit Error Rate (BER), Received Signal Strength Indication (RSSI), Signal-to-Noise Ratio (SNR), Inter-Cell Interference (ICI), Block Error Rate (BLER), etc. Common channels for active decoding include common control channels, such as so-called "pilot" or synchronization channels. Frame or packet preambles may also or alternatively be detected and read without necessarily decoding other portions of the data.

Yet other types of scans may be performed without signal decoding. For example, energy detection or accumulation is simple to implement, but gives less information as to feasibility. For instance, energy detection may show the likely existence of a second network, but will not give any information as to a second network's available bandwidth, signal quality, etc. Other types of scans may make use of beacons, out-of-band discovery mechanisms, capabilities for messages, etc.

Moreover, it is readily appreciated that multiple parameters may be combined into one or more "vectors", thus enabling more complex comparisons of the scanned networks. In fact, in some embodiments, a vector comprises one or more parameters specific to the network type (in some cases, also appropriately weighted), such that each vector receives an overall score. For example, certain clients may value BER more highly (e.g., lower bit error rate is desired) than higher RSSI, etc. In this example, the vector with the lower BER would correspond to the better candidate network.

At step 404, responsive to an incipient failure, a replacement connection to the replacement network is established. In one exemplary embodiment, a device primes registration with the replacement network when one or more monitored parameters have dropped below a threshold value. For example, if a monitored RSSI of the first network has dropped below a "warning" threshold, then the device selects one or more of the scanned networks, and establishes a connection.

It is of particular note that the warning threshold is not in the discussed embodiment the point of actual connection failure. Instead, the warning threshold is a point chosen to optimize between several competing desires. Specifically, a higher warning threshold is more likely to give a "false positive"; i.e., signal an incipient failure event, where no subsequent failure occurs. False positives will cause unnecessary connection attempts and wasted power, etc. In contrast, a lower warning threshold may present a warning too late i.e., a low warning threshold will not give enough time to prime the handover network. If the handover network is not properly primed, the data connection will experience a noticeable discontinuity. For example, a heavily buffered data stream (e.g., high definition video) may require much more conservative warning thresholds than an unbuffered or lightly buffered audio stream.

In one embodiment, the incipient failure is based on channel conditions deteriorating. For example, the incipient failure may be based on high BER, low SNR, low RSSI, etc. In some variants, the rate of deterioration is also (or alternatively) considered. For example, a BER which is increasing may indicate worsening channel conditions. However, the rate of change may indicate if the increase in BER is due to a momentary effect (e.g., fast fading, occlusion, etc.), or permanent condition (e.g., moving out of range, etc.).

In other embodiments, the warning threshold is based on one or more network considerations. Certain networks are more tolerant to delay, and/or disruption than other networks. Accordingly, handovers from a tolerant network to an intolerant network may have much lower thresholds; in contrast, intolerant networks may prefer to prime for handover earlier, rather than deal with a possible disruption in service.

In one exemplary implementation, the replacement connection established during step 404 may have repercussions on software applications. For example, a device running a High Definition (HD) video application may not have any similar networks (i.e., those capable of delivering an HD stream); consequently, the software application may adjust its application behavior, in view of the replacement connection. For example, the device may opt to switch its current video application to a lower quality Standard Definition (SD) video stream.

At step 406, the application data stream is buffered over the first and replacement connection. In this step, both first and replacement connections are actively receiving data. In the event that the channel conditions of the first network continue to decline, the first connection is terminated (see step 408). However, in the event that the channel conditions of the first network improve, the replacement connection can be terminated. Since both connections are in use, power consumption and network resource efficiency suffers; however, step 406 ensures that transition between the first and replacement networks is seamless, which in the larger view may actually conserve on power and resource use (i.e., by not dropping the call/session, and requiring re-instantiation).

In one embodiment, the first and replacement connection buffer the same data. Also referred to as "parallel buffering", the first and replacement connections effectively transmit the same information. One benefit of the parallel buffering solution is that the software application does not preferentially receive data from the first or replacement connection. In fact, the first and replacement connection could be interchangeably used, without adverse effects. The duplicate stream is simply ignored until the duplicate stream is ready for use. However, parallel buffered solutions are not always ideal. Specifically, parallel buffered solutions are generally less "efficient", in that network resources of the first and replacement connection are duplicating efforts.

To these ends, in alternate embodiments, the first and replacement connections buffer different amounts and/or types of data. In one variant, the amounts of data are based on the capabilities of the first and replacement connection. Alternatively, for applications where the application data is granular, a certain percentage may be transmitted over the first connection, and the remaining percentage may be transmitted over the replacement connection. In other embodiments, the first and replacement connections buffer different types of data. For example, in one such scenario, application data and some parity data may be transmitted over the first connection, and application data and alternate parity data transmitted over the replacement connection. In yet other examples, the first connection may be used to transmit data of a first encoding redundancy (e.g., 1/2 rate, 1/3 rate, etc.), and the replacement connection may be used to transmit data of a second encoding redundancy.

Yet other combinations and variations of data type, data size, data use over the first and replacement connection can be made by one of ordinary skill in the related arts, given the contents of the present disclosure.

In one exemplary embodiment, step 406 has "primed" the device for handover. Specifically, while the device is buffering data between the first and replacement connection, the device can drop either first or replacement connection without adverse impact to the user.

At step 408, responsive to a failure of the first connection, the application data stream transitions to the replacement connection. As previously alluded to in step 406, the device is "primed" for handover, and can drop either the first or replacement connection without significant impact. Thus, in one exemplary embodiment of the present invention, the lowest levels of hardware/software (e.g., PHY, MAC) can detect failure, and execute the handover. Specifically, rather than executing handover in higher layers of software (e.g., API, application, etc.), the PHY can be set to trigger a handover based on a very low level vector comprising measurements such as BER, RSSI, SNR, etc.

### Mobile Apparatus

Exemplary apparatus 500 useful for implementing the methods of the present invention is illustrated.

The apparatus 500 includes a handover controller subsystem 502 such as a digital signal processor, microprocessor, field-programmable gate array, or plurality of processing components mounted on one or more substrates 504. The handover controller subsystem may also comprise an internal cache memory. The handover controller subsystem 502 is connected to a memory subsystem 506 comprising memory which may for example, comprise SRAM, flash and SDRAM components. The memory subsystem may implement one or more of DMA type hardware so as to facilitate data accesses as is well known in the art. Moreover, it is appreciated that various embodiments of the memory subsystem may be either secure, or unsecure. Secure embodiments require further encryption and encoding to protect the integrity of data stored thereon.

In alternate embodiments, the handover controller 502 may be logically subsumed within the operations of another main processor, or within the radio/modem subsystems.

The radio/modem subsystems 508 generally include a digital baseband, analogue baseband, TX front-end and RX front-end. As shown, the radio/modem subsystems could comprise CDMA modems, Wi-Fi modems, and WiMAX modems. However, it is appreciated that in the future wireless technologies will continue to multiply, and device solutions will merge, and coalesce available wireless technologies. Accordingly, a wide array of suitable technologies include: GSM (Global System for Mobile Communications), GPRS (General packet radio service), EDGE (Enhanced Data Rates for GSM Evolution), UMTS (Universal Mobile Telecommunications System), CDMA2000 (Code Division Multiple Access 2000), LTE (Long Term Evolution), WiMAX (Wireless Microwave Access), Wi-Fi, etc. Moreover, the number of radio/modem subsystems may vary from that depicted. For example, some embodiments may use a greater number of radio/modem subsystems (e.g., four (4) modems, five (5) modems, etc.), or alternately fewer radio/modem subsystems may be implemented. In fact, certain embodiments may implement so-called "software defined radio" (SDR) that can support a wide array of protocols using a single radio/modem subsystem. Still other combinations thereof will be appreciated by ones of ordinary skill in view of the present disclosure.

The illustrated power management subsystem (PMS) 512 provides power to the apparatus, and may comprise an integrated circuit and or a plurality of discrete electrical components. In one exemplary portable mobile device implementation of the apparatus the power management subsystem 512 interfaces with a power source such as, e.g., battery, photovoltaic cell, external charger, inductive charging mat, etc.

In certain embodiments of the apparatus, a host interface system 514 may be provided. A host interface may include any number of well-known I/O including, without limitation: a serial bus, UART (Universal Asynchronous Receiver/Transmitter), USB (Universal Serial Bus), Firewire, Ethernet, PCI (Peripheral Component Interconnect), RS-232 (Recommended Standard 232), etc. Generally, the host interface comprises a wired interface, suitable for providing application data to application software executing on a host processor (not shown). In one variant, the host interface system 514 provides a simple network interface executing an API (Application Programming Interface) thereon.

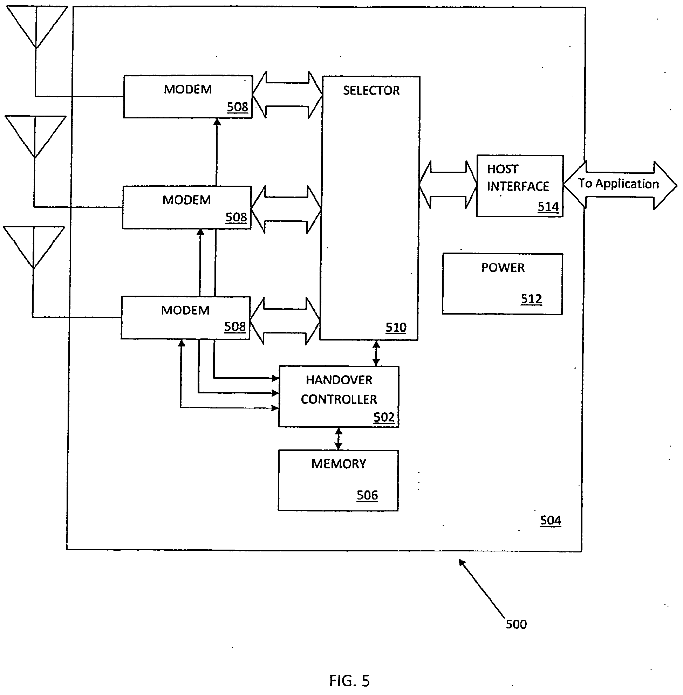

In one exemplary embodiment, the radio/modem subsystems 508 individually manage the operation of the wireless link. The handover controller 502 receives handover conditions from the host interface 514. In this implementation, the handover controller is coupled to the radio/modem subsystems and directs the PHY and MAC based on the handover conditions. As shown in FIG. 5, a selector 510 receives data streams from the radio/modem subsystems 508, and selects the appropriate data stream for the host interface system 514 based on input from the handover controller 502. In one exemplary embodiment, the selector is a logical component of the handover controller.

In one such incarnation, the selector additionally comprises one or more circular buffers. The circular buffers comprises a fixed-size buffer that connects the end of the buffer to the beginning of the buffer, resulting in a looping data structure. For example, during operation a first and second circular buffer can each be allocated to a first and second network. When both circular buffers have substantially equivalent data, then the buffers are "synchronized", and the data stored thereon can be interchangeably provided to the host interface 514. Thereafter, the buffers can store and loop until either the first or second network is terminated.

Myriad other schemes for transitioning between wireless networks will be recognized by those of ordinary skill given the present disclosure.

It will be recognized that while certain aspects of the invention are described in terms of a specific sequence of steps of a method, these descriptions are only illustrative of the broader methods of the invention, and may be modified as required by the particular application. Certain steps may be rendered unnecessary or optional under certain circumstances. Additionally, certain steps or functionality may be added to the disclosed embodiments, or the order of performance of two or more steps permuted. All such variations are considered to be encompassed within the invention disclosed and claimed herein.

While the above detailed description has shown, described, and pointed out novel features of the invention as applied to various embodiments, it will be understood that various omissions, substitutions, and changes in the form and details of the device or process illustrated may be made by those skilled in the art without departing from the invention. The foregoing description is of the best mode presently contemplated of carrying out the invention. This description is in no way meant to be limiting, but rather should be taken as illustrative of the general principles of the invention. The scope of the invention should be determined with reference to the claims.

## Claims

1. A method for seamless transition between a first network (102A) and a second network (102B), the method comprising:
while in a data communication with the first network (102A), monitoring a signal quality of the first network (102A);
if the signal quality of the first network falls below a first threshold (304), establishing a replacement connection (306) with the second network (102B); and
if the signal quality of the first network (102A) falls below a second threshold (307), transitioning the data communication to the replacement connection (308),
**characterized in that** it comprises
capturing and buffering data from the first and second network (102A, 102B) at a client device in parallel.

2. The method of Claim 1, **characterized in that** said buffering is performed equally between the first and second network (102A, 102B).

3. The method of Claim 1 or 2, **characterized in that** said buffering is performed based on the capabilities of the first and second network (102A, 102B).

4. The method of one of claims 1 to 3, **characterized in that** said buffering comprises receiving the data transmitted over the first and second networks (102A, 102B), wherein the data is equivalent.

5. The method of one of Claims 1 to 3, **characterized in that** said buffering comprises receiving the data transmitted over the first and second networks (102A, 102B), wherein the data is different.

6. The method of one of Claims 1 to 5, **characterized in that** said buffering is performed based on battery considerations.

7. The method of Claim 1 or 6, **characterized in that** the signal quality is assessed based on a Received Signal Strength Indicator (RSSI).

8. The method of one of Claims 1 to 7, **characterized in that** the signal quality is assessed based on a Bit Error Rate (BER).

9. The method of one of Claims 1 to 8, **characterized in that** the signal quality is assessed based on a history of signal values associated with the first network (102A) and second network (102B).

10. The method of one of Claims 1 to 9, **characterized in that** the replacement connection is terminated if the signal quality of the first network (102A) rises above the first threshold.

11. The method of one of Claims 1 to 10, **characterized in that** at least one of the first and second thresholds (304, 307) is selected based on application considerations.

12. The method of one of Claims 1 to 11, **characterized in that** at least one of the first and second thresholds (304, 307) is selected based on network considerations.

13. The method of one of Claims 1 to 12, **characterized in that** at least one of the first and second thresholds (304, 307) is selected based on modem considerations.

14. The method of one of Claims 1 to 13, **characterized in that** at least one of the first and second thresholds (304, 307) is selected based on battery considerations.

15. A wireless apparatus for carrying out the method of one of Claims 1 to 14, comprising:
a first wireless interface and a second wireless interface;
a processor;
and
a computer readable medium comprising instructions which when executed by the processor:
monitor the first wireless interface for a first and second condition;
responsive to the first condition, enable the second wireless interface; and,
responsive to the second condition, disable the first wireless interface;
**characterized in that** it further comprises
buffers for buffering in parallel data received from the first wireless interface and the second wireless interface.

16. The apparatus of Claim 15, **characterized in that** the buffer is a circular buffer.

17. The apparatus of Claim 15 or 16, **characterized in that** said first wireless interface comprises a WLAN (Wireless Local Area Network) interface, and said second interface comprises a WMAN (Wireless Metropolitan Area Network) interface.

18. The apparatus of one of Claims 15 to 17, **characterized in that** said instructions are further configured to switch a call or session occurring over said first interface to said second interface responsive to the second condition.

19. The apparatus of one of Claims 15 to 18, **characterized in that** said enabling the second interface comprises initiating at least a portion of authentication and identification procedures required by a network with which said second connection is to be established.

20. A computer readable storage medium, the medium comprising instructions which, when executed by the processor of an apparatus according to one of claims 15 to 19, enable:
receipt of one or more handover conditions;
monitoring of at least one of a plurality of wireless interfaces for the one or more handover conditions;
establishment of a data session between a first of the plurality of wireless interfaces and the processor; and,
responsive to the one or more handover conditions being satisfied, transition of the data session to a different one of the wireless interfaces and the processor;
wherein the data session is preserved during the transition.

## Patentansprüche

1. Verfahren für den nahtlosen Übergang zwischen einem ersten Netzwerk (102A) und einem zweiten Netzwerk (102B), wobei das Verfahren umfasst:
Überwachen einer Signalqualität des ersten Netzwerks (102A), während eine Datenkommunikation mit dem ersten Netzwerk (102A) läuft;
Herstellen einer Ersatzverbindung (306) mit dem zweiten Netzwerk (102B), wenn die Signalqualität des ersten Netzwerks unter eine erste Schwelle (304) fällt, und
Übergeben der Datenkommunikation an die Ersatzverbindung (308), wenn die Signalqualität des ersten Netzwerks (102A) unter eine zweite Schwelle (307) fällt,
**dadurch gekennzeichnet, dass** das Verfahren umfasst:
das parallele Erfassen und Zwischenspeichern der Daten von dem ersten und zweiten Netzwerk (102A, 102B) an einer Client-Vorrichtung.

2. Verfahren nach Anspruch 1, **dadurch gekennzeichnet, dass** das Zwischenspeichern gleichmäßig zwischen dem ersten und zweiten Netzwerk (102A, 102B) erfolgt.

3. Verfahren nach Anspruch 1 oder 2, **dadurch gekennzeichnet, dass** das Zwischenspeichern auf der Grundlage der Kapazitäten des ersten und zweiten Netzwerks (102A, 102B) erfolgt.

4. Verfahren nach einem der Ansprüche 1 bis 3, **dadurch gekennzeichnet, dass** das Zwischenspeichern das Empfangen der über das erste und das zweite Netzwerk (102A, 102B) übertragenen Daten umfasst, wobei die Daten äquivalent sind.

5. Verfahren nach einem der Ansprüche 1 bis 3, **dadurch gekennzeichnet, dass** das Zwischenspeichern das Empfangen der über das erste und das zweite Netzwerk (102A, 102B) übertragenen Daten umfasst, wobei die Daten unterschiedlich sind.

6. Verfahren nach einem der Ansprüche 1 bis 5, **dadurch gekennzeichnet, dass** das Zwischenspeichern auf der Grundlage batteriebezogener Überlegungen erfolgt.

7. Verfahren nach Anspruch 1 oder 6, **dadurch gekennzeichnet, dass** die Signalqualität auf der Grundlage eines Empfangssignal-Stärkeindikators (Received Signal Strength Indicator oder RSSI) bewertet wird.

8. Verfahren nach einem der Ansprüche 1 bis 7, **dadurch gekennzeichnet, dass** die Signalqualität auf der Grundlage einer Bitfehlerrate (BER) bewertet wird.

9. Verfahren nach einem der Ansprüche 1 bis 8, **dadurch gekennzeichnet, dass** die Signalqualität auf der Grundlage einer Historie von Signalwerten bewertet wird, die dem ersten Netzwerk (102A) und dem zweiten Netzwerk (102B) zugeordnet sind.

10. Verfahren nach einem der Ansprüche 1 bis 9, **dadurch gekennzeichnet, dass** die Ersatzverbindung beendet wird, wenn die Signalqualität des ersten Netzwerks (102A) über die erste Schwelle steigt.

11. Verfahren nach einem der Ansprüche 1 bis 10, **dadurch gekennzeichnet, dass** zumindest eine von erster und zweiter Schwelle (304, 307) auf der Grundlage von anwendungsbezogenen Überlegungen ausgewählt wird.

12. Verfahren nach einem der Ansprüche 1 bis 11, **dadurch gekennzeichnet, dass** zumindest eine von erster und zweiter Schwelle (304, 307) auf der Grundlage von netzwerkbezogenen Überlegungen ausgewählt wird.

13. Verfahren nach einem der Ansprüche 1 bis 12, **dadurch gekennzeichnet, dass** zumindest eine von erster und zweiter Schwelle (304, 307) auf der Grundlage von modembezogenen Überlegungen ausgewählt wird.

14. Verfahren nach einem der Ansprüche 1 bis 13, **dadurch gekennzeichnet, dass** zumindest eine von erster und zweiter Schwelle (304, 307) auf der Grundlage von batteriebezogenen Überlegungen ausgewählt wird.

15. Drahtlose Vorrichtung zur Durchführung des Verfahrens nach einem der Ansprüche 1 bis 14, umfassend:
eine erste drahtlose Schnittstelle und eine zweite drahtlose Schnittstelle;
einen Prozessor;
und
ein computerlesbares Medium umfassend Anweisungen, die, wenn sie von dem Prozessor ausgeführt werden:
die erste drahtlose Schnittstelle auf einen ersten und zweiten Zustand hin überwachen;
in Ansprechen auf den ersten Zustand die zweite drahtlose Schnittstelle aktivieren; und
in Ansprechen auf den zweiten Zustand die erste drahtlose Schnittstelle deaktivieren;
**dadurch gekennzeichnet, dass** sie des Weiteren umfasst:
Pufferspeicher zum parallelen Zwischenspeichern von Daten, die von der ersten drahtlosen Schnittstelle und der zweiten drahtlosen Schnittstelle empfangen werden.

16. Vorrichtung nach Anspruch 15, **dadurch gekennzeichnet, dass** der Pufferspeicher ein Ringpufferspeicher ist.

17. Vorrichtung nach Anspruch 15 oder 16, **dadurch gekennzeichnet, dass** die erste drahtlose Schnittstelle eine WLAN-Schnittstelle (Wireless Local Area Network) umfasst, und die zweite Schnittstelle eine WMAN-Schnittstelle (Wireless Metropolitan Area Network) umfasst.

18. Vorrichtung nach einem der Ansprüche 15 bis 17, **dadurch gekennzeichnet, dass** die Anweisungen des Weiteren dazu ausgebildet sind, einen Anruf oder eine Session, der/die über die erste Schnittstelle erfolgt, in Ansprechen auf den zweiten Zustand auf die zweite Schnittstelle zu schalten.

19. Vorrichtung nach einem der Ansprüche 15 bis 18, **dadurch gekennzeichnet, dass** das Aktivieren der zweiten Schnittstelle das Initiieren zumindest eines Teils von Authentifizierungs- und Identifizierungsverfahren umfasst, die für ein Netzwerk erforderlich sind, mit dem die zweite Verbindung hergestellt werden soll.

20. Computerlesbares Speichermedium, wobei das Medium Anweisungen umfasst, die, wenn sie von dem Prozessor einer Vorrichtung nach einem der Ansprüche 15 bis 19 ausgeführt werden, Folgendes ermöglichen:
den Empfang einer oder mehrerer Übergabebedingungen;
die Überwachung zumindest einer der Vielzahl von drahtlosen Schnittstellen auf die eine oder die mehreren Übergabebedingungen hin;
die Herstellung einer Datensession zwischen einer ersten der Vielzahl von drahtlosen Schnittstellen und dem Prozessor; und
in Ansprechen auf die Erfüllung der einen oder mehreren Übergabebedingungen, Übergeben der Datensession an eine unterschiedliche der drahtlosen Schnittstellen und den Prozessor;
wobei die Datensession während der Übergabe beibehalten wird.

## Revendications

1. Procédé pour la transition sans couture entre un premier réseau (102A) et un second réseau (102B), le procédé comprenant :
pendant la communication des données avec le premier réseau (102A), surveiller la qualité du signal du premier réseau (102A) ;
si la qualité du signal du premier réseau tombe au-dessous d'un premier seuil (304), établir une liaison de remplacement (306) avec le second réseau (102B) ; et
si la qualité du signal du premier réseau (102A) tombe au-dessous d'un second seuil (307), transférer la communication des données à la liaison de remplacement (308),
**caractérisé en ce que** le procédé comprend :
capturer et tamponner les données du premier et second réseau (102A, 102B) en parallèle dans un dispositif client.

2. Procédé selon la revendication 1, **caractérisé en ce que** le tamponnage s'effectue également entre le premier et second réseau (102A, 102B).

3. Procédé selon la revendication 1 ou 2, **caractérisé en ce que** le tamponnage s'effectue sur la base des capacités du premier et second réseau (102A, 102B).

4. Procédé selon l'une quelconque des revendications 1 à 3, **caractérisé en ce que** le tamponnage comprend la réception des données transmises sur le premier et second réseau (102A, 102B), les données étant équivalentes.

5. Procédé selon l'une quelconque des revendications 1 à 3, **caractérisé en ce que** le tamponnage comprend la réception des données transmises sur le premier et second réseau (102A, 102B), les données étant différentes.

6. Procédé selon l'une quelconque des revendications 1 à 5, **caractérisé en ce que** le tamponnage s'effectue sur la base des considérations de batterie.

7. Procédé selon la revendication 1 ou 6, **caractérisé en ce que** la qualité du signal est évaluée sur la base d'une indication d'intensité du signal reçu (RSSI ou Received Signal Strength Indicator).

8. Procédé selon la revendication 1 à 7, **caractérisé en ce que** la qualité du signal est évaluée sur la base d'un taux d'erreur (BER).

9. Procédé selon la revendication 1 à 8, **caractérisé en ce que** la qualité du signal est évaluée sur la base d'une histoire des valeurs du signal associées avec le premier réseau (102A) et le second réseau (102B).

10. Procédé selon l'une quelconque des revendications 1 à 9, **caractérisé en ce que** la liaison de remplacement est terminée si la qualité du signal du premier réseau (102A) monte au-dessus du premier seuil.

11. Procédé selon l'une quelconque des revendications 1 à 10, **caractérisé en ce qu'**au moins le premier et/ou le second seuil (304, 307) est sélectionné sur la base des considérations d'application.

12. Procédé selon l'une quelconque des revendications 1 à 11, **caractérisé en ce qu'**au moins le premier et/ou le second seuil (304, 307) est sélectionné sur la base des considérations de réseau.

13. Procédé selon l'une quelconque des revendications 1 à 12, **caractérisé en ce qu'**au moins le premier et/ou le second seuil (304, 307) est sélectionné sur la base des considérations de modem.

14. Procédé selon l'une quelconque des revendications 1 à 13, **caractérisé en ce qu'**au moins le premier et/ou le second seuil (304, 307) est sélectionné sur la base des considérations de batterie.

15. Appareil sans fil pour la mise en oeuvre le procédé selon l'une quelconque des revendications 1 à 14, l'appareil comprenant :
une première interface sans fil et une seconde interface sans fil ;
un processeur ;
et
un support lisible par ordinateur, comprenant des instructions qui :
surveillent la première interface sans fil pour une première et une seconde condition ;
en réponse à la première condition, rendent active la seconde interface sans fil ; et,
en réponse à la seconde condition, rendent inactive la première interface sans fil ;
quand elles sont exécutées par le processeur, **caractérisé en ce qu'**il en outre comprend
des mémoires tampons pour le tamponnage en parallèle des données reçues par la première interface sans fil et la seconde interface sans fil.

16. Appareil selon la revendication 15, **caractérisé en ce que** le tampon est un tampon circulaire.

17. Appareil selon la revendication 15 ou 16, **caractérisé en ce que** la première interface sans fil comprend une interface WLAN (Wireless Local Area Network), et la seconde interface comprend une interface WMAN (Wireless Metropolitan Area Network).

18. Appareil selon l'une quelconque des revendications 15 à 17, **caractérisé en ce que** les instructions sont en outre configurées pour commuter un appel ou une session qui se produit par la première interface à la seconde interface en réponse à la seconde condition.

19. Appareil selon l'une quelconque des revendications 15 à 18, **caractérisé en ce que** l'activation de la seconde interface comprend l'initiation d'au moins une partie des procédures d'authentification et d'identification requises par un réseau avec lequel la seconde liaison doit être établie.

20. Support lisible par ordinateur, le support comprenant des instructions qui rendent possibles, quand elles sont exécutées par un appareil selon l'une quelconque des revendications 15 à 19 :
la réception d'une ou plusieurs conditions de transfert ;
la surveillance d'au moins une d'une pluralité des interfaces sans fil pour l'une ou les plusieurs conditions de transfert ;
l'établissement d'une session des données entre une première de la pluralité des interfaces sans fil et le processeur ; et
si la une ou les plusieurs conditions de transfert est/sont remplie(s), en réponse la transition de la session des données à une différente des interfaces sans fil et le processeur ;
la session des données étant préservée pendant la transition.
